# EUROPEAN PATENT APPLICATION

(11) **EP 1 693 349 A1**
(43) Date of publication of application: **23.08.2006**
(21) Application number: 06290246.5
(22) Date of filing: 13.02.2006
(51) Int. Cl.: C03C 8/10, H01J 17/49

(54) **Dielectric composition for plasma display panel and plasma display panel**

(30) Priority: 14.02.2005 KR 2005012092
(71) Applicant: LG Electronics Inc., Seoul 150-721 (KR)
(72) Inventor: Lee, Sung Wook B 1918, Poongrim I-won Apt. 255-1, Seongnam, Gyeonggi-do (KR)
(74) Representative: Vignesoult, Serge L. M.

(57) **Abstract**

A dielectric composition for a plasma display panel and a plasma display panel including a dielectric layer formed of the dielectric composition are provided. The dielectric composition comprises PbO, B₂O₃, SiO₂, Al₂O₃ and RO (BaO+MgO+ZnO). Contents of PbO, B₂O₃, SiO₂, Al₂O₃ and RO (BaO+MgO+ZnO) range from 60 wt% to 75 wt%, 3 wt% to 20 wt%, 5 wt% to 30 wt%, 0.0001 wt% to 6 wt% and 0.0001 wt% to 5 wt%, respectively.

## Description

### BACKGROUND OF THE INVENTION

### Field of the Invention

The present invention relates to a dielectric composition for a plasma display panel and a plasma display panel comprising a dielectric layer formed of the dielectric composition.

### Description of the Background Art

A conventional plasma display panel comprises a front panel and a rear panel. Barrier ribs formed between the front panel and the rear panel form discharge cells. Each of the cells is filled with a main discharge gas such as neon (Ne), helium (He) or a Ne-He gas mixture and an inert gas containing a small amount of xenon (Xe).

Discharges of the inert gases are generated by a high frequency voltage supplied to the plasma display panel, while the discharges of the inert gases emit vacuum ultraviolet rays. Vacuum ultraviolet rays emit phosphors formed between the barrier ribs to display images corresponding to image data on the plasma display panel.

Since the plasma display panel can be manufactured to be thin and light, the plasma display panel has been considered as a next generation display apparatus.

Conventionally, the plasma display panel has been manufactured using a glass substrate with a high strain point. However, recently, manufacturers of the plasma display panel have been substituting a soda-lime glass substrate for the more expensive glass substrate with the high strain point.

While the soda-lime glass substrate is inexpensive, the soda-lime glass substrate is heavily strained at a temperature higher than a specific temperature. Accordingly, a dielectric layer of the plasma display panel must have a firing temperature of 520 °C or less to allow for the use of the soda-lime glass substrate in the manufacture of a plasma display panel.

### SUMMARY OF THE INVENTION

Accordingly, an object of the present invention is to solve at least the problems and disadvantages of the background art.

Embodiments of the present invention provide a dielectric composition for a plasma display panel with a low firing temperature.

Embodiments of the present invention provide a plasma display panel including a dielectric layer formed of a dielectric composition for a plasma display panel with a low firing temperature.

According to an aspect of the present invention, there is provided a dielectric composition for a plasma display panel comprising PbO, B₂O₃, SiO₂, Al₂O₃ and modifier comprising at least one of BaO, MgO or ZnO, wherein the modifier, based on total weight of the dielectric composition, is equal to or more than 0.0001 wt% to less than or equal to 5 wt%.

According to another aspect of the present invention, there is provided a dielectric composition for a plasma display panel comprising Pbo, based on total weight of the dielectric composition, equal to or more than 60 wt% to less than or equal to 75 wt%, B₂O₃, based on total weight of the dielectric composition, equal to or more than 3 wt% to less than or equal to 20 wt%, SiO₂, based on total weight of the dielectric composition, equal to or more than 5 wt% to less than or equal to 30 wt%, Al₂O₃, based on total weight of the dielectric composition, equal to or more than 0.0001 wt% to less than or equal to 6 wt% and Modifier, based on total weight of the dielectric composition, equal to or more than 0.0001 wt% to less than or equal to 5 wt%, and comprising at least one of BaO, MgO or ZnO.

According to another aspect of the present invention, there is provided a dielectric composition for a plasma display panel comprising Pbo, based on total weight of the dielectric composition, equal to or more than 63.7 wt% to less than or equal to 68.5 wt%, B₂O₃, based on total weight of the dielectric composition, equal to or more than 3.5wt% to less than or equal to 19 wt%, SiO₂, based on total weight of the dielectric composition, equal to or more than 5.8 wt% to less than or equal to 29 wt%, Al₂O₃, based on total weight of the dielectric composition, equal to or more than 0.0001 wt% to less than or equal to 5.5 wt% and Modifier, based on total weight of the dielectric composition, equal to or more than 0.5 wt% to less than or equal to 3.5 wt%, and comprising at least one of BaO, MgO or ZnO.

According to another aspect of the present invention, there is provided a dielectric composition for a plasma display panel comprising PbO- B₂O₃- SiO₂ based glass powder, Intermediate oxides , based on total weight of the dielectric composition, equal to or more than 0.0001 wt% to less than or equal to 6 wt% and Modifier, based on total weight of the dielectric composition, equal to or more than 0.0001 wt% to less than or equal to 5 wt%, and comprising at least one of BaO, MgO or ZnO.

According to another aspect of the present invention, there is provided a plasma display panel comprising a substrate, an electrode formed on the substrate and a dielectric layer formed on the electrode, wherein the dielectric layer is formed of a dielectric composition comprising PbO, B₂O₃, SiO₂, Al₂O₃ and modifier comprising at least one of BaO, MgO or ZnO, and the modifier, based on total weight of the dielectric composition, is equal to or more than 0.0001 wt% to less than or equal to 5 wt%.

The dielectric composition for the plasma display panel according to the embodiments of the present invention lowers the firing temperature of the dielectric layer.

The plasma display panel according to the embodiments of the present invention comprises the dielectric layer with the low firing temperature owing to the dielectric composition, thus enabling the use of a soda-lime glass substrate in the plasma display panel manufactureing process.

### BRIEF DESCRIPTION OF THE DRAWINGS

The accompany drawings, which are included to provide a further understanding of the invention and are incorporated in and constitute a part of this specification, illustrate embodiments of the invention and together with the description serve to explain the principles of the invention. In the drawings:

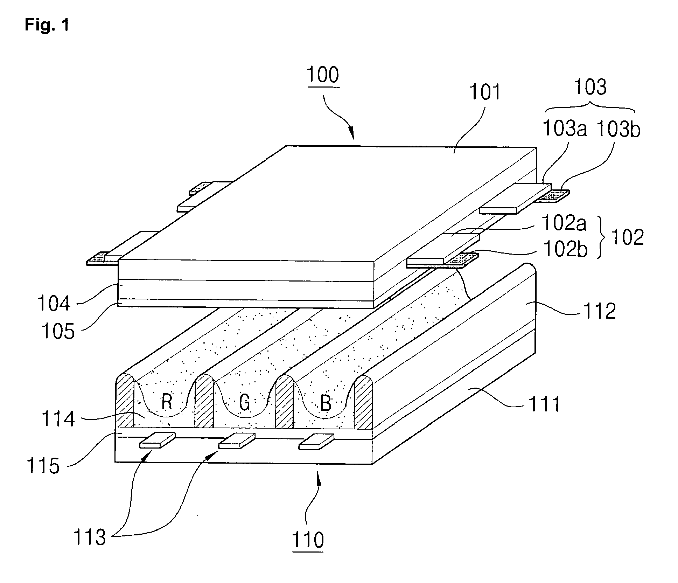

FIG. 1 shows a structure of a plasma display panel according to an embodiment of the present invention.

### DETAILED DESCRIPTION OF PREFERRED EMBODIMENTS

Reference will now be made in detail to embodiments of the present invention, examples of which are illustrated in the accompanying drawings.

According to an aspect of the present invention, there is provided a dielectric composition for a plasma display panel comprising PbO, B₂O₃, SiO₂, Al₂O₃ and modifier comprising at least one of BaO, MgO or ZnO, wherein the modifier, based on total weight of the dielectric composition, is equal to or more than 0.0001 wt% to less than or equal to 5 wt%.

The Pbo, based on total weight of the dielectric composition for the plasma display panel, is equal to or more than 60 wt% to less than or equal to 75 wt%.

The B₂O₃, based on total weight of the dielectric composition for the plasma display panel, is equal to or more than 3 wt% to less than or equal to 20 wt%.

The SiO₂, based on total weight of the dielectric composition for the plasma display panel, is equal to or more than 5 wt% to less than or equal to 30 wt%.

The Al₂O₃, based on total weight of the dielectric composition for the plasma display panel, is equal to or more than 0.0001 wt % to less than or equal to 6 wt%.

A glass transition temperature of a dielectric layer formed of the dielectric composition is equal to or more than 425 □ to less than or equal to 455 □.

A coefficient of thermal expansion of the dielectric layer formed of the dielectric composition is equal to or more than 70 x 10⁻⁷/□ to less than or equal to 88 × 10⁻⁷/□.

A firing temperature of the dielectric layer formed of the dielectric composition is more than or equal to 500 □ to less than or equal to 520 □.

According to another aspect of the present invention, there is provided a dielectric composition for a plasma display panel comprising Pbo, based on total weight of the dielectric composition, equal to or more than 60 wt% to less than or equal to 75 wt%, B₂O₃, based on total weight of the dielectric composition, equal to or more than 3 wt% to less than or equal to 20 wt%, SiO₂, based on total weight of the dielectric composition, equal to or more than 5 wt% to less than or equal to 30 wt%, Al₂O₃, based on total weight of the dielectric composition, equal to or more than 0.0001 wt% to less than or equal to 6 wt% and Modifier, based on total weight of the dielectric composition, equal to or more than 0.0001 wt% to less than or equal to 5 wt%, and comprising at least one of BaO, MgO or ZnO.

the modifier equal to or more than 0.5wt% to less than or equal to 3.5wt%.

According to another aspect of the present invention, there is provided a dielectric composition for a plasma display panel comprising Pbo, based on total weight of the dielectric composition, equal to or more than 63.7 wt% to less than or equal to 68.5 wt%, B₂O₃, based on total weight of the dielectric composition, equal to or more than 3.5wt% to less than or equal to 19 wt%, SiO₂, based on total weight of the dielectric composition, equal to or more than 5.8 wt% to less than or equal to 29 wt%, Al₂O₃, based on total weight of the dielectric composition, equal to or more than 0.0001 wt% to less than or equal to 5.5 wt% and Modifier, based on total weight of the dielectric composition, equal to or more than 0.5 wt% to less than or equal to 3.5 wt%, and comprising at least one of BaO, MgO or ZnO.

A glass transition temperature of a dielectric layer formed of the dielectric composition is equal to or more than 425 □ to less than or equal to 455 □.

A coefficient of thermal expansion of the dielectric layer formed of the dielectric composition is equal to or more than 70 × 10⁻⁷/□ to less than or equal to 88 x 10⁻⁷/□.

A firing temperature of the dielectric layer formed of the dielectric composition is more than or equal to 500 □ to less than or equal to 520 □.

According to another aspect of the present invention, there is provided a dielectric composition for a plasma display panel comprising PbO- B₂O₃- SiO₂ based glass powder, Intermediate oxides , based on total weight of the dielectric composition, equal to or more than 0.0001 wt% to less than or equal to 6 wt% and Modifier, based on total weight of the dielectric composition, equal to or more than 0.0001 wt% to less than or equal to 5 wt%, and comprising at least one of BaO, MgO or ZnO.

The glass powder comprises Pbo equal to or more than 63.7 wt% to less than or equal to 75 wt% based on total weight of the dielectric composition, B₂O₃ equal to or more than 3 wt% to less than or equal to 20 wt% based on total weight of the dielectric composition, and SiO₂ equal to or more than 5 wt% to less than or equal to 30 wt% based on total weight of the dielectric composition.

The Intermediate oxides comprises Al₂O₃.

A plasma display panel according to the embodiments of the present invention comprises a substrate, an electrode formed on the substrate and a dielectric layer formed on the electrode, wherein the dielectric layer is formed of a dielectric composition comprising PbO, B₂O₃, SiO₂, Al₂O₃ and modifier comprising at least one of BaO, MgO or ZnO, and the modifier, based on total weight of the dielectric composition, is equal to or more than 0.0001 wt% to less than or equal to 5 wt%.

The Pbo, based on total weight of the dielectric composition, is equal to or more than 60 wt% to less than or equal to 75 wt%.

The B₂O₃, based on total weight of the dielectric composition, is equal to or more than 3 wt% to less than or equal to 20 wt%.

The SiO₂, based on total weight of the dielectric composition, is equal to or more than 5 wt% to less than or equal to 30 wt%.

The Al₂O₃, based on total weight of the dielectric composition, is equal to or more than 0.0001 wt% to less than or equal to 6 wt%.

Hereinafter, exemplary embodiments of the present invention will be described in detail with reference to the attached drawings.

A dielectric composition for a plasma display panel according to an embodiment of the present invention comprises PbO-B₂O₃ -SiO₂ based glass powder, intermediate oxides and modifier comprising at least one of BaO, MgO or ZnO. The intermediate oxides comprises Al₂O₃. The PbO-B₂O₃ -SiO₂ based glass powder comprises PbO, B₂O₃, and SiO₂.

It is preferable that a content of Pbo, based on total weight of the dielectric composition for the plasma display panel, is equal to or more than 60 wt% to less than or equal to 75 wt%. When the content of PbO is less than 60 wt%, a firing temperature of a dielectric layer formed of the dielectric composition is too high. Moreover, when the content of PbO is more than 75 wt%, a coefficient of thermal expansion (CTE) of the dielectric layer is too high and the firing temperature of the dielectric layer is too low.

It is preferable that a content of B₂O₃, based on total weight of the dielectric composition for the plasma display panel, is equal to or more than 3 wt% to less than or equal to 20 wt%. When the content of B₂O₃ is beyond the above-described range, it is difficult to vitrify a glass and also, the viscosity of the glass increases. As a result, the firing temperature of the dielectric layer increases.

It is preferable that a content of SiO₂, based on total weight of the dielectric composition for the plasma display panel, is equal to or more than 5 wt% to less than or equal to 30 wt%. When the content of SiO₂ is beyond the above-described range, it is difficult to vitrify the glass and also, the viscosity of the glass increases. As a result, the firing temperature of the dielectric layer increases.

It is preferable that a content of Al₂O₃, based on total weight of the dielectric composition for the plasma display panel, is equal to or more than 0.0001 wt% to less than or equal to 6 wt%. Al₂O₃ adds stability to the glass and prevents crystallization of the glass. However, when the content of Al₂O₃ is more than 6 wt%, viscosity of the glass is too high due to the crystallization of the glass so that the firing temperature of the dielectric layer increases.

It is preferable that a content of the modifier comprising at least one of BaO, MgO or ZnO, based on total weight of the dielectric composition for the plasma display panel, is equal to or more than 0.0001 wt% to less than or equal to 5 wt%. The modifier is for opening the structure of the glass. When the modifier is less than 0.0001 wt%, the firing temperature of the dielectric layer formed of the dielectric composition will not be low enough due to difficulty in cutting off combination of the glasses. Moreover, when the content of the modifier is more than 5 wt%, since a glass network is cut off, while the firing temperature of the dielectric layer decreases, the coefficient of thermal expansion of the dielectric layer is too high.

A glass transition temperature of the dielectric layer formed of the dielectric composition is equal to or more than 425 □ to less than or equal to 455 □. A coefficient of thermal expansion of the dielectric layer formed of the dielectric composition is equal to or more than 70 x 10⁻⁷/□ to less than or equal to 88 x 10⁻⁷/□. A firing temperature of the dielectric layer formed of the dielectric composition is more than or equal to 500 □ to less than or equal to 520 □.

The present invention now will be described more fully with reference to example embodiments of the invention. However, the present invention should not be construed as being limited to the example embodiments set forth herein.

[Examples 1 through 9]

Table 1 indicates glass transition temperatures, coefficients of thermal expansion and firing temperatures of dielectric compositions comprising PbO, B₂O₃, SiO₂, Al₂O₃ and modifier comprising at least one of BaO, MgO or ZnO in different amount as shown in examples 1 through 9.

**[Table 1]**

| | PbO (wt%) | B₂O₃ (wt%) | SiO₂ (wt%) | Al₂O₃ (wt%) | Modifier (wt%) | Glass Transition Temperature (□) (□) | CTE (x10⁻⁷/□) | Firing Temperature (□) |
|---|---|---|---|---|---|---|---|---|
| Example 1 | 63.7 | 3.5 | 29.0 | 1.8 | 2 | 452.9 | 80.4 | 520 |
| Example 2 | 63.7 | 11.0 | 19.6 | 3.7 | 2 | 445.5 | 77.9 | 510 |
| Example 3 | 63.7 | 19.0 | 9.8 | 5.5 | 2 | 452.4 | 71.8 | 520 |
| Example 4 | 66.0 | 3.0 | 28.9999 | 0.0001 | 2 | 444.8 | 79.1 | 510 |
| Example 5 | 66.0 | 11.0 | 19.6 | 1.4 | 2 | 435.5 | 73.1 | 500 |
| Example 6 | 66.0 | 19.0 | 9.8 | 3.2 | 2 | 450.3 | 77.4 | 520 |
| Example 7 | 68.5 | 3.5 | 25.0 | 1 | 2 | 434.0 | 87.9 | 500 |
| Example 8 | 68.5 | 11.0 | 15.6 | 2.9 | 2 | 427.1 | 85.6 | 500 |
| Example 9 | 68.5 | 19.0 | 5.8 | 4.70 | 2 | 447.5 | 79.7 | 510 |

As can be seen from Table 1, a firing temperature of a dielectric layer formed of the dielectric compositions constituted depending on the examples 1 through 9 is 520 □ or less, that is, more than or equal to 500 □ to less than or equal to 520 □. Moreover, a coefficient of thermal expansion of the dielectric layer is equal to or more than 71.8 x 10⁻⁷/□ to less than or equal to 87.9 × 10⁻⁷/□. As shown in Table 1, a variation in the coefficients of thermal expansion of the dielectric layer is minimal. The modifier comprising at least one of BaO, MgO or ZnO, based on total weight of the dielectric composition for the plasma display panel, is equal to or more than 0.0001 wt% to less than or equal to 5 wt%. More preferably, The modifier is equal to or more than 0.5 wt% to less than or equal to 3.5 wt%

FIG. 1 shows a structure of a plasma display panel according to an embodiment of the present invention. As shown in FIG. 1, the plasma display panel according to the embodiment of the present invention comprises a front panel 100 and a rear panel 110. The front panel 100 comprises a front glass substrate 101 and the rear panel 110 comprises a rear glass substrate 111.

A scan electrode 102 and a sustain electrode 103 are paired to form the sustain electrode pair. A sustain electrode pair for maintaining lthe ight emissions of cells through a mutual discharge between the scan electrode 102 and the sustain electrode 103 are formed on the front glass substrate 101. The scan electrode 102 and the sustain electrode 103 each comprise transparent electrodes 102a and 103a made of a transparent material, that is, ITO and bus electrodes 102b and 103b made of a metal material. A scan pulse for scan of the plasma display panel and a sustain pulse for discharge maintenance are applied to the scan electrode 102. The sustain pulse is mainly applied to the sustain electrode 103. An upper dielectric layer 104 is formed on an upper part of the sustain electrode pair to limit a discharge current and to provide insulation between the scan and sustain electrodes. A protective layer 105 is formed on an upper surface of the upper dielectric layer 104 to facilitate discharge conditions.

Address electrodes 113 are formed on the rear glass substrate 111 to intersect the sustain electrode pairs. A lower dielectric layer 115 is formed on an upper part of the address electrode 113 to provide insulation between the address electrodes. Barrier ribs 112 are formed on the lower dielectric layer 115 to form discharge cells. A phosphor layer 114 is coated between the barrier ribs 112 to emit visible light.

The upper dielectric layer 104 or the lower dielectric layer 115 is formed of a dielectric composition according to the embodiment of the present invention. The dielectric composition is formed on the scan electrode 102 and the sustain electrode 103 or the address electrode 113 and then fired. The dielectric composition according to the embodiment of the present invention comprises PbO, B₂O₃, SiO₂, Al₂O₃ and RO (BaO+MgO+ZnO). The contents of PbO, B₂O₃, SiO₂, Al₂O₃ and modifier comprising at least one of BaO, MgO or ZnO range from 60 wt% to 75 wt%, 3 wt% to 20 wt%, 5 wt% to 30 wt%, 0.0001 wt% to 6 wt% and 0.0001 wt% to 5 wt%, respectively.

The embodiment of the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A dielectric composition for a plasma display panel comprising PbO, B₂O₃, SiO₂, Al₂O₃ and modifier comprising at least one of BaO, MgO or ZnO,
wherein the modifier, based on total weight of the dielectric composition, is equal to or more than 0.0001 wt% to less than or equal to 5 wt%.

2. The dielectric composition for the plasma display panel of claim 1, wherein the Pbo, based on total weight of the dielectric composition, is equal to or more than 60 wt% to less than or equal to 75 wt%.

3. The dielectric composition for the plasma display panel of claim 1, wherein the B₂O₃, based on total weight of the dielectric composition, is equal to or more than 3 wt% to less than or equal to 20 wt%.

4. The dielectric composition for the plasma display panel of claim 1, wherein the SiO₂, based on total weight of the dielectric composition, is equal to or more than 5 wt% to less than or equal to 30 wt%.

5. The dielectric composition for the plasma display panel of claim 1, wherein the Al₂O₃, based on total weight of the dielectric composition, is equal to or more than 0.0001 wt% to less than or equal to 6 wt%.

6. The dielectric composition for the plasma display panel of claim 1, wherein a glass transition temperature of a dielectric layer formed of the dielectric composition is equal to or more than 425 □ to less than or equal to 455 □.

7. The dielectric composition for the plasma display panel of claim 1, wherein a coefficient of thermal expansion of the dielectric layer formed of the dielectric composition is equal to or more than 70 x 10⁻⁷/□ to less than or equal to 88 × 10⁻⁷/□.

8. The dielectric composition for the plasma display panel of claim 1, wherein a firing temperature of the dielectric layer formed of the dielectric composition is more than or equal to 500 □ to less than or equal to 520 □ .

9. A dielectric composition for a plasma display panel comprising:
Pbo, based on total weight of the dielectric composition, equal to or more than 60 wt% to less than or equal to 75 wt%;
B₂O₃, based on total weight of the dielectric composition, equal to or more than 3 wt% to less than or equal to 20 wt%;
SiO₂, based on total weight of the dielectric composition, equal to or more than 5 wt% to less than or equal to 30 wt%;
Al₂O₃, based on total weight of the dielectric composition, equal to or more than 0.0001 wt% to less than or equal to 6 wt%; and
Modifier, based on total weight of the dielectric composition, equal to or more than 0.0001 wt% to less than or equal to 5 wt%, and comprising at least one of BaO, MgO or ZnO.

10. The dielectric composition for the plasma display panel of claim 9, wherein the modifier is equal to or more than 0.5wt% to less than or equal to 3.5wt%.

11. A dielectric composition for a plasma display panel comprising:
Pbo, based on total weight of the dielectric composition, equal to or more than 63.7 wt% to less than or equal to 68.5 wt%;
B₂O₃, based on total weight of the dielectric composition, equal to or more than 3.5wt% to less than or equal to 19 wt%;
SiO₂, based on total weight of the dielectric composition, equal to or more than 5.8 wt% to less than or equal to 29 wt%;
Al₂O₃, based on total weight of the dielectric composition, equal to or more than 0.0001 wt% to less than or equal to 5.5 wt%; and
Modifier, based on total weight of the dielectric composition, equal to or more than 0.5 wt% to less than or equal to 3.5 wt%, and comprising at least one of BaO, MgO or ZnO.

12. The dielectric composition for the plasma display panel of claim 11, wherein a glass transition temperature of a dielectric layer formed of the dielectric composition is equal to or more than 425 □ to less than or equal to 455 □.

13. The dielectric composition for the plasma display panel of claim 11, wherein a coefficient of thermal expansion of the dielectric layer formed of the dielectric composition is equal to or more than 70 x 10⁻⁷/□ to less than or equal to 88 × 10⁻⁷/□.

14. The dielectric composition for the plasma display panel of claim 11, wherein a firing temperature of the dielectric layer formed of the dielectric composition is more than or equal to 500 □ to less than or equal to 520 □ .

15. A dielectric composition for a plasma display panel comprising:
PbO- B₂O₃- SiO₂ based glass powder;
Intermediate oxides, based on total weight of the dielectric composition, equal to or more than 0.0001 wt% to less than or equal to 6 wt%; and
Modifier, based on total weight of the dielectric composition, equal to or more than 0.0001 wt% to less than or equal to 5 wt%, and comprising at least one of BaO, MgO or ZnO.

16. The dielectric composition for the plasma display panel of claim 15, wherein the glass powder comprises Pbo equal to or more than 63.7 wt% to less than or equal to 75 wt% based on total weight of the dielectric composition, B₂O₃ equal to or more than 3 wt% to less than or equal to 20 wt% based on total weight of the dielectric composition, and SiO₂ equal to or more than 5 wt% to less than or equal to 30 wt% based on total weight of the dielectric composition.

17. The dielectric composition for the plasma display panel of claim 15, wherein the Intermediate oxides comprises Al₂O₃.

18. A plasma display panel comprising:
a substrate;
an electrode formed on the substrate; and
a dielectric layer formed on the electrode,
wherein the dielectric layer is formed of a dielectric composition comprising PbO, B₂O₃, SiO₂, Al₂O₃ and modifier comprising at least one of BaO, MgO or ZnO, and the modifier, based on total weight of the dielectric composition, is equal to or more than 0.0001 wt% to less than or equal to 5 wt%.

19. The plasma display panel of claim 18, wherein the Pbo, based on total weight of the dielectric composition, is equal to or more than 60 wt% to less than or equal to 75 wt%.

20. The plasma display panel of claim 18, wherein the B₂O₃, based on total weight of the dielectric composition, is equal to or more than 3 wt% to less than or equal to 20 wt%.

21. The plasma display panel of claim 18, wherein the SiO₂, based on total weight of the dielectric composition, is equal to or more than 5 wt% to less than or equal to 30 wt%.

22. The plasma display panel of claim 18, wherein the Al₂O₃, based on total weight of the dielectric composition, is equal to or more than 0.0001 wt% to less than or equal to 6 wt%.
